# EUROPÄISCHE PATENTSCHRIFT

(11) **EP 0 818 230 B1**
(45) Veröffentlichungstag und Bekanntmachung des Hinweises auf die Patenterteilung: **21.04.1999**
(21) Anmeldenummer: 96110571.5
(22) Anmeldetag: 01.07.1996
(51) Int. Cl.: B01D 39/00, B01D 39/14, B01D 39/16, B01D 53/02

(54) **Verfahren zur Herstellung von Faserfiltern**
Process for producing a fibre filter
Procédé de fabrication d' un filtre constitué de fibres

(43) Veröffentlichungstag der Anmeldung: 14.01.1998
(73) Patentinhaber: J.C. Binzer Papierfabrik GmbH & Co. KG, 35116 Hatzfeld/Eder (DE)
(72) Erfinder: Binzer, Jürgen Carl, 35116 Hatzfeld/Eder (DE); Patzelt, Helmut, Dr. rer. nat. Dipl.-Chem., 56242 Marienrachdorf (DE)
(74) Vertreter: Olbricht, Karl Heinrich, Dipl.-Phys.

(56) Entgegenhaltungen:
- EP-A- 0 069 323
- EP-A- 0 100 907
- EP-A- 0 118 618
- DE-A- 4 115 404
- GB-A- 2 077 141
- US-A- 5 350 443

## Beschreibung

Die Erfindung betrifft ein Verfahren zum Herstellen von Faserfiltern gemäß dem Oberbegriff von Anspruch 1.

Derartige Filter dienen allgemein zur Reinigung strömender Medien wie Luft, staub- oder rauchbeladenen Gasen o.dgl. Typische Einsatzbeispiele sind Luftfilter für Verbrennungsmotore und Zuluftfilter für Fahrzeugkabinen. Dabei haltert z.B. ein Stützbehälter einen meist mattenförmigen Faserkörper, der durch Tiefenfiltration allmählich Rückstände anreichert; bei Sättigung wird Ersatz durch ein neues Speicherfilter notwendig, wo nicht Abreinigung durch Waschen bzw. Ausblasen genügt.

In DE-A-43 44 805 ist ein solches Filtermedium im Grundsatz beschrieben, das Kunststoff-Fasern mit einem höherschmelzenden Kern und mit einem etwa 20 °C niedriger schmelzenden Mantel aufweist. Verkürzt gesagt, trägt ein Gerüst aus dickeren Fasern damit punktuell verbundene dünnere Fasern, welche Füllmittel bzw. Feinkörper - z.B. Aktivkohle-Partikel - umschließen, wobei die Fasermäntel an ihren Überkreuzungsstellen verschmolzen sind. Die Herstellung ist nicht unproblematisch, zumal relativ enge thermische Bedingungen eingehalten werden müssen. Der Veröffentlichung lassen sich Aufbau und Eigenschaften bestimmter Filter nicht entnehmen; Angaben zur Filterfeinheit fehlen ebenso wie etwa zum Durchlaßwiderstand irgendwelcher Bauformen, der bei Flächenverschmelzungen sehr hoch sein dürfte.

EP-A-0 069 323 beschreibt ein Verfahren zur Herstellung von Filtermatten für Küchendunsthauben mit zwei oder mehreren Deckbahnen aus porösem und flexiblem Material und Zwischenschichten aus körnigem Filtermittel, beispielsweise Aktivkohle. Die einzelnen Körner des Filtermittels werden mittels eines wässrigen Dispersionsklebers punktförmig an den porösen Deckbahnen fixiert, was zu langen Trocknungszeiten führt. Der Kleber wird zudem mit einer leicht verdampfenden Flüssigkeit (Frigen) verdünnt, was ökologisch bedenklich ist. Die Dicke der körnigen Filtermittelschicht ist höchstens gleich der zweifachen mittleren Korngröße des Filtermittels (0,5 bis 2 mm), so daß die Dicke der Träger- bzw. Deckbahnen (1 bis 8 mm) stets um ein mehrfaches größer ist als die Dicke der zwischen den Deckbahnen liegenden aktiven Filtermittelschicht. Dies hat den Nachteil, daß der Anteil an filteraktiven Partikeln innerhalb der Filtermatte begrenzt ist. Je nach Größe der Filterfläche erschöpft sich die Filterwirkung relativ rasch. Vor allem bei stark kontaminierter Luft muß das Filter häufig gewechselt werden, was nicht nur zeit- sondern auf Dauer auch kostenintensiv ist.

US-A-5,350,443 benutzt für die Herstellung von Filtern für Fahrzeugkabinen ein Trägermaterial aus luftdurchlässigem und thermisch-flexiblem Material, das auf einer Seite mit einer Adsorptions-Filterschicht aus körnigen Adsorptionspartikeln und auf der anderen gegenüberliegenden Seite mit einer Elektret-Filterschicht aus Mikrofasergewebe versehen wird. Letztere wird mittels eines Sprühklebers auf dem Trägermaterial befestigt, während die Adsorptionspartikel an Kleberpunkten fixiert werden, die mittels einer rotierenden Druckmatrize auf dem Trägermaterial aufgebracht werden. Die von den Partikeln gebildete Schicht ist auch hier wesentlich dünner als die Bodenlage, was die Filterkapazität entsprechend begrenzt. Zudem wird auf die Partikelschicht keine weitere Fasermaterial-Decklage aufgebracht, was die Dimensionsstabilität und die Festigkeit des Filters beeinträchtigt. Die Anwendung weiterer Verarbeitungsschritte wie Kalandrieren, Schneiden, Falten, Aufwickeln u.dgl. ist problematisch.

GB-A-2 077 141 offenbart ein Filtermaterial für den Einsatz in Bekleidungsstücken, insbesondere für Schutzbekleidung. Ein Schaumstoff- oder Gewebeträger wird mit einer diskontinuierlichen Schicht aus thermoplastischem Kleber bedruckt und anschließend mit Adsorptionspartikeln, z.B. Aktivkohle bestreut. Der Kleber hat eine wässrige oder lösemittelhaltige Basis und wird in kleinen Punkten ("dots") mit kontinuierlichen Abständen aufgebracht.

Aufgabe der Erfindung ist es, ein Verfahren zum Herstellen von Faserfiltern zu schaffen, das eine rationelle und kostengünstige Fertigung von Filtermaterial unterschiedlicher Formen und Abmessungen ermöglicht. Das Filtermaterial soll insgesamt eine deutlich verbesserte Filterwirksamkeit aufweisen und verhältnismäßig offen sein, um geringe Druckverluste bei durchströmenden Fluiden zu bewirken. Angestrebt wird ferner eine hohe Dimensionsstabilität und Festigkeit des Filtermaterials.

Diese Aufgabe wird für ein gattungsgemäßes Verfahren zum Herstellen von Faserfiltern durch die Merkmalskombination im kennzeichnenden Teil des Anspruchs 1 gelöst. Ausgestaltungen sind Gegenstand der Ansprüche 2 bis 16.

Das erfindungsgemäße Verfahren ermöglicht es, auf überraschend einfache und kostengünstige Weise ein verhältnismäßig offenes Faserfilter herzustellen, das gegenüber herkömmlichen Produkten eine deutlich verbesserte Adsorptionswirkung aufweist. Je nach Anwendungsfall kann man zwischen der Fasermaterial-Bodenlage und der Fasermaterial-Decklage stets eine ausreichende Menge an Adsorptionspartikeln einbringen, da nacheinander mehrere Schichten von Klebepunkten und Partikeln aufgetragen werden. Die Dicke der Partikelschicht läßt sich mit einfachen Mitteln präzise und reproduzierbar wählen. Sie ist zudem stets größer als die Dicke der Fasermaterial-Lagen, was sich günstig auf die Durchlässigkeit des gesamten Filters auswirkt. Man erhält eine außerordentlich gute und langanhaltende Filterwirkung.

Durch die Verwendung des Schmelzklebers ist kein zusätzlicher Energieaufwand zur Aushärtung oder Trocknung notwendig, was sich äußerst günstig auf die Verfahrenskosten auswirkt. Der Sprühauftrag sorgt darüber hinaus für eine gleichmäßige Verteilung des Klebers über die Fasermaterial-Bodenlage und damit für einen ausreichenden Halt der aufgestreuten Adsorptionspartikel sowohl an den Fasermaterial-Lagen als auch untereinander. Das Mengenverhältnis von Kleber zu Adsorberpartikeln verhindert ein Zusetzen des Fasermaterials, das stets eine ausreichende Durchlässigkeit behält. Die Filteroberfläche wird nur minimal beeinflußt.

Gemäß Anspruch 2 wird die Bodenlage auf einem Trägerband abgelegt und nach Aufbringen von Schmelzkleber und Partikeln mit der Decklage durch Kalandrieren zu einem Verbundkörper verbunden. Hierdurch wird den Filterschichten untereinander und damit dem gesamten Filterkörper eine ausreichende Festigkeit verliehen. Das Filtermaterial besitzt eine hohe Dimensionsstabilität und Festigkeit.

Nach Anspruch 3 können die Fasermaterial-Lagen Wandstärken im Bereich von 0,05 bis 1,0 mm, vorzugsweise 0,1 bis 0,6 mm haben, was eine hohe Flexibilität des Verbundkörpers bewirkt. Ferner bestehen die Füllmittel aus Partikeln im Korngrößenbereich von 0,1 bis 6 mm, vorzugsweise 0,3 bis höchstens 1,0 mm, so daß sich zugleich eine große aktive Oberfläche mit entsprechend intensiver Adsorptionswirkung ergibt.

Die Ausgetaltung von Anspruch 4 sieht vor, daß Boden- und Decklagen aus synthetischen Vliesen und/oder Meltblown-Systemen verwendet werden, wobei je nach Anwendungsart auch unterschiedliche Kombinationen zum Einsatz kommen können. Kunststoff-Vliese, wie sie unter den Handelsbezeichnungen Colback und Reemay erhältlich sind, verwenden Polyester- bzw. Polyamidfasern, die mit geringem Titer und infolge dessen hohem Oberflächenanteil herstellbar sind. Auch kurzgeschnittene Stapelfasern sind gut brauchbar.

In Einklang mit Anspruch 5 kann wenigstens eine der Boden- bzw. Decklagen imprägniert sein, was die Vielfalt der Einsatz-Möglichkeiten weiter steigert.

In den Ansprüchen 6 und 7 sind wichtige Hauptbestandteile der Füllmittel-Partikel angegeben. Als anorganisches Material eignen sich z.B. poröse Tone und Tonmineralien, Perlite, synthetische und natürliche Zeolithe, Braunstein, Aluminiumoxide, Silicate und Aluminosilicate, bevorzugt Aktivkohle. Alle diese Stoffe können mit oder ohne biozider und/oder fungizider Behandlung verwendet werden. Unter organischem Material kommen funktionelle Polymere bzw. solche mit funktionellen Oberflächen, gesinterte Polymere wie Polyethylen und Polypropylen sowie funktionalisierte Polystyrole, ferner Superadsorbentien auf der Basis von Acrylsäure-Derivaten ferner Ionenaustauscher, Katalysatoren u.dgl. in Betracht.

Mit der Ausbildung von Anspruch 8 erzielt man eine rationelle und kostengünstige Fertigung des Filtermaterials. Danach ist vorgesehen, daß der Schmelzkleber-Auftrag durch Herabtropfen oder -sprühen auf die mit dem waagrecht angeordneten Trägerband herangeführte Bodenlage erfolgt. Es ist aber auch möglich und im Einklang mit Anspruch 9 vorgesehen, daß der Schmelzkleber schräg auf die Bodenlage gesprüht oder tröpfchenförmig aufgeschossen wird, wobei sich Tröpfchenströme auch kreuzen können.

Eine noch andere Ausführungsform des Verfahrens ist laut Anspruch 10 dadurch gekennzeichnet, daß die Partikel gleichzeitig mit dem Schmelzkleber-Auftrag auf die Bodenlage gestreut werden. Das kann den Arbeitsablauf verkürzen und mithin schnelleren Durchgang des Trägerbandes erlauben.

Alternativ sieht Anspruch 11 vor, daß die Partikel auf die Bodenlage gestreut werden, nachdem sie mit Schmelzkleber-Punkten versehen worden sind. Dies hat den Vorteil, daß die auftreffenden Partikel unmittelbar auf der schon vorbehandelten Bodenlage haften, was geringen Streuverlust sicherstellt.

Eine weitere Verfahrens-Variante besteht gemäß Anspruch 12 darin, daß die Partikel in einer Richtung schräg oder quer zur Sprüh- bzw. Tropfrichtung des Schmelzklebers auf die Bodenlage aufgebracht werden, beispielsweise mittels Schleuderrad oder Druckluft-Impulsen. Auf diese Weise ist eine Verwirbelung möglich, welche verminderten Schmelzkleber-Anteil erlaubt, ohne die Haftung auf der Bodenlage zu beeinträchtigen. Dabei können die Partikel gemäß Anspruch 13 entgegen der Laufrichtung des Trägerbandes auf die Bodenlage aufgebracht, z.B. aufgebürstet werden, wodurch sich in der Partikelschicht bevorzugte Orientierungen ausbilden können.

Gemäß Anspruch 14 wird das Trägerband unter mehreren Stationen und aus diesen dosiert beladen mit Schmelzkleber- und Partikel-Behältern hindurchgeführt. Man erlangt auf diese Art besonders stabile Verbundkörper mit äußerst gleichmäßigem Schichtaufbau, die sich namentlich für Plattenware eignen.

Sehr vorteilhaft ist die Filter-Gestaltung von Anspruch 15, wonach die Gesamtdicke des Verbundkörpers im Bereich von 0,4 bis 8 mm, vorzugsweise zwischen 1,5 und 3,0 mm liegt. Das trägt maßgeblich zu günstiger Fertigung und Lagerung, aber auch zur Vielfalt der Einsatz-Möglichkeiten bei. Günstig ist es in diesem Zusammenhang, daß der Verbundkörper laut Anspruch 16 auf Maß schneidbar oder geschnitten ist, namentlich als Roll- bzw. Bogen- oder Plattenware, so daß den unterschiedlichsten Bedarfsfällen Rechnung getragen werden kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
- Fig. 1: eine vergrößerte Teil-Querschnittsansicht eines Faserfilter-Verbundkörpers,
- Fig. 2: ein Prinzipschema eines Herstellungsverfahrens,
- Fig. 3: ein Prinzipschema ähnlich Fig. 2, jedoch in geänderter Ausführungsform und
- Fig. 4: ein Prinzipschema einer weiteren Verfahrens-Abwandlung.

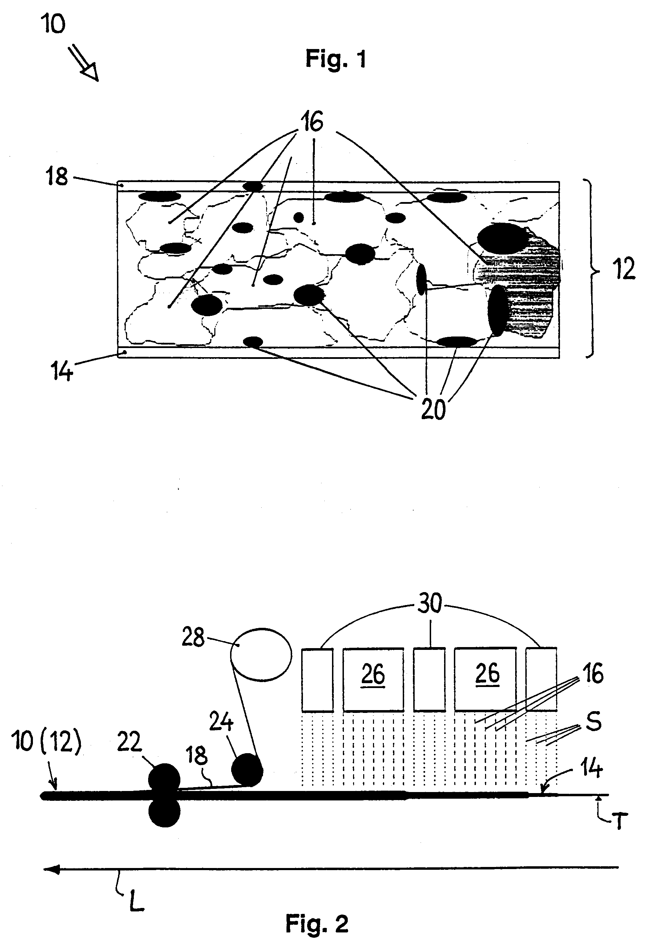

In schematisierter Weise und stark vergrößert zeigt Fig. 1 ein Faserfilter 10 in Gestalt eines Verbundkörpers 12, der eine Bodenlage 14 sowie eine Deckenlage 18 und dazwischen Partikel 16 aufweist, die durch Klebepunkte 20 untereinander und zu den Außenlagen 14, 18 hin fixiert sind. Im Rahmen der Erfindung wird unter Klebepunkten auch jede Form einer flächigen oder fadenförmigen Verteilung von fließfähig aufgebrachtem Schmelzkleber verstanden. Dabei sieht die Erfindung einen Schmelzkleber-Anteil vor, der zwischen 5 % und 30 % des Partikelgewichts liegt, vorzugsweise im Bereich von 8 % bis 15 % letzteres vor allem bei Zuluftfiltern für Fahrzeugkabinen.

Verschiedene Formen der Verfahrensführung zur Herstellung solcher Faserfilter 10 ergeben sich aus Fig. 2 bis 4. Man erkennt im Beispiel der Fig. 2, daß ein Trägerband T in Laufrichtung L unter einer Anzahl von Behandlungsstationen hindurchgeführt wird, wobei eine Bodenlage 14 zunächst aus einem Schmelzkleber-Behälter 30 mit Schmelzkleber S besprüht wird, worauf in einer nächsten Station aus einem Partikel-Behälter 26 Füllmittel-Partikel 16 auf die besprühte Bodenlage 14 aufgebracht werden. Man kann diese Auftragsweise in weiteren Stationen fortsetzen, falls das erwünscht ist, um besonders stabile Verbundkörper 12 mit bestimmtem Eigenschafts-Profil zu erzielen. Als oberer Abschluß dient eine Decklage 18, die von einer Decklagenrolle 28 abgezogen und über eine Umlenkwalze 24 an das vom Trägerband T geförderte Zwischenprodukt herangeführt wird. In einem Walzenpaar 22 wird das Material kalandriert, so daß das fertige Faserfilter 10 als konfektioniertes oder konfektionierbares Flachmaterial ausgetragen wird.

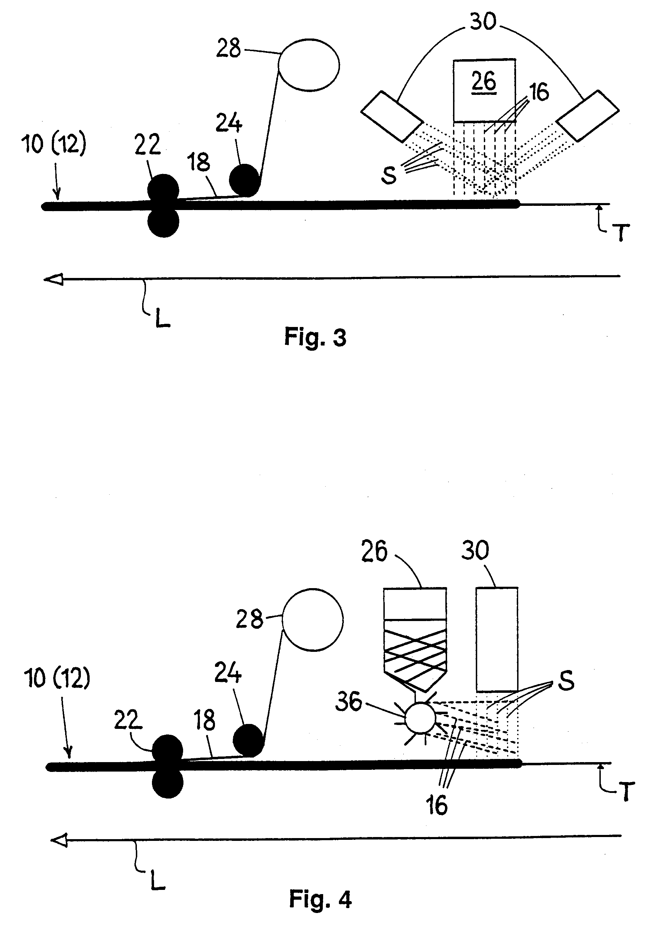

Grundsätzlich gleichartig läuft das Verfahren in der Ausführungsform von Fig. 3 ab. Während auch hier die Partikel 16 aus einem oberhalb des Trägerbandes T angeordneten Partikel-Behälter 26 auf die (hier nicht gekennzeichnete) Bodenlage 14 herabrieseln, wird der Schmelzkleber S aus Behältern 30 schräg oder quer zur Richtung des Partikelregens auf die Bodenlage aufgesprüht oder aufgeschossen, wobei sich die Partikel- und Tröpfchenströme kreuzen oder nacheinander auftreffen können. Geeignete Sprühvorrichtungen können über oder neben dem Türträgerband T angeordnet sein und Düsenleisten oder Druckluft-Aggregate aufweisen, von denen der Schmelzkleber S chargenweise oder auch intermittierend an die Bodenlage bzw. auf und zwischen die Partikel 16 gelangt.

Eine andere Möglichkeit des Schmelzkleber-Auftrags ist aus Fig. 4 ersichtlich, wobei ein Partikel-Behälter 26 oberhalb eines Schleuderrads 36 angeordnet ist, das einer Beschichtungsstation für Schmelzkleber S nachgeordnet ist. Es fördert die Partikel 16 in unterschiedlichem Winkel entgegen der Laufrichtung L des Trägerbandes T sozusagen zurück, wodurch besondere Orientierungen der Partikel 16 auf den Klebepunkten erzielt werden können.

Bei der praktischen Erprobung wurde eine Bodenlage 14 (Untervlies) mit Schmelzkleber S besprüht und unmittelbar danach aus einem Sieb 26 Aktivkohle aufgerüttelt. Es ergab sich gute Haftung des Hauptteils der Partikel 16, worauf überschüssige Kohlereste abgeschüttelt wurden. Die Beschichtung mit dem ersten Kleberauftrag bewirkte ein Flächengewicht der Grund-Partikelschicht von etwa 230 g/m². Bei weiterem Kleberauftrag mit einem Flächengewicht von ca. 15 g/m² und anschließender Partikelbeschichtung, was noch zweimal wiederholt wurde, erhielt der Verbundkörper 12 ein Flächengewicht von rund 550 g/m², bei einer Dicke des Faserfilters 10 von maximal 1,8 mm. Die Luftdurchlässigkeit wurde an verschiedenen Proben zu 1.800 bis 1.900 ℓ/m²s gemessen. Der Druckverlust lag zwischen 0,21 und 0,26 mbar [hPa] bei einer Durchströmung mit 40 cm/s (Meßfläche 10 cm²).

Wesentliche Vorteile des erfindungsgemäßen Verfahrens beruhen darauf, daß keine speziellen Partikelgeometrien notwendig, aber sowohl regelmäßige - namentlich sphärische - als auch unregelmäßige Körper einsetzbar sind. Eine Naßverarbeitung wie beim typischen Papierprozeß wird vermieden. Dies bewirkt eine beträchtliche Energie-Ersparnis und verhindert Oberflächen-Veränderungen, die herkömmlich durch Zusetzen der Mikro- und Makroporen möglich bzw. unvermeidlich waren. Man kann das Anteil-Verhältnis von Kleber- zu Partikelmenge nach Bedarf einstellen.

Das Faserfilter 10 nach der Erfindung zeichnet sich insbesondere dadurch aus, daß es hohen Luft- bzw. Flüssigkeits-Durchsatz mit entsprechend niedrigem Strömungswiderstand für die zu filternden Medien ermöglicht. Wichtig ist, das solche Faserfilter 10 dimensionsstabil sind und nach Bedarf kalandriert, geschnitten und gefaltet werden können. Für eine Verformung ist eine Wärmebehandlung z.B. mit einem Infrarotstrahler, einer Wärmetauscherplatte o.dgl. zweckmäßig. Beim Filtern erfolgt keine Abgabe von Gerüchen und auch kein Fogging-Effekt; in der praktischen Anwendung ist eine Kombination mit gängigen Filtersystemen problemlos möglich. Sehr vorteilhaft ist, daß Maße und Formen sowohl bei Rollals auch bei Plattenware bedarfsgerecht erzielbar sind.

Zu den Anwendungsgebieten gehören die Entfernung oder Umwandlung von Schadstoffen aus gasförmigen und wässrigen Medien; der spezielle Einsatz als adsorptives Filtermedium für PKW-Innenfilter, Flugzeugkabinenfilter o.dgl. In Betracht kommen auch Frittierfilter, Dunstabzugshaubenfilter, Filter für Kopiergeräte, Staubsaugerausblasfilter, Tiefenfilter, Lösungsmittelrückgewinnung.

Die Erfindung ist nicht auf die beschriebenen Beispiele beschränkt. Die Schmelzpunkte 20 können wahlweise oder zusätzlich aus Schmelzklebern vom Ethylen-Vinylacetat-Typ gebildet sein. Es eignen sich z.B. Polyethyl-Vinyl-Acetate, Polyvinylchlorid-Plastisole, Polyvinylalkohole, Copolymere aus Polyethylen-Polyvinylalkoholen, Polyamid usw. Während als anorganische Partikel auch organische modifizierte Silicate in Betracht kommen, haben sich als organisches Material auch funktionelle Polymere wie Polyamide, Hydroxyalkylmethacrylate, Maleinsäureanhydrid-Polymere, Polyacrylate, Polymethacrylate, Polyacrylamide, stark basische Ionenaustauscher, Polyphenole mit Amin- und Phenolfunktionen, Polyhydroxycarbonsäuren - z.B. Polyhodroxybuttersäure - , Copolymere aus Styrol und Divinylbenzol, Polyvinylalkohol, Copolymere aus Polyethylen sowie Polovinylalkoholen bewährt. Entsprechend können unter den Superadsorbentien Polyacrylamide, Polyacrylsäuren und ihre Salze zum Einsatz kommen. Als Beispiele gesinterter Polymere seien Polyethylen, Polypropylen, Polytetrafluorethylen sowie partiell fluorierte Polyethylene und Polypropylene erwähnt.

Für die synthetischen Vliese kommen Materialien wie Polyester, Polyethylen, Polypropylen, Polyvinylalkohol, Polyamid, Glasfaservliese ohne und mit Polyvinylalkohol-Verfestigung sowie Vliese aus Metallfäden, aus Kohlefasern und aus Metallfilamenten in Betracht. Meltblown-Systeme können mit und ohne Elektretausrüstung aus Polyethylen-, Polypropylen-, oder Polycarbonat-Mikrofasern aufgebaut sein.

In den Rahmen der Erfindung fallen ferner die verschiedensten Abwandlungen. Prinzipiell hat ein Faserfilter 10 aus fluid-durchlässigem Fasermaterial erfindungsgemäß einen flachen Verbundkörper 12 mit Boden- und Decklage 14 bzw. 18, zwischen denen locker gelagerte Partikel 16 feinkörniger Füllmittel, z.B. Aktivkohle, mittels Klebepunkten 20 fixiert sind. Die Partikelschicht ist wesentlich dicker als die Boden- und Decklagen 14 bzw. 18, von denen zumindest eine imprägniert sein kann. Eine Luftdurchlässigkeit von wenigstens 1.200ℓ/m²s wird mit Partikeln 16 im Korngrößenbereich von 0,1 bis 6 mm 0,3 bis max. 1,0 mm erzielt, die aus anorganischem und/oder organischem Material, ferner aus Ionenaustauschern, Katalysatoren, Superadsorbentien o.dgl. bestehen können. Der Schmelzkleber S erweicht bevorzugt zwischen 100 und 145 °C. Der Schmelzkleber Anteil beträgt z.B. 8 % bis 15 % des Partikel-Gewichts. Der als Roll- oder Plattenware kalandrierte Verbundkörper 12 kann 0,4 bis 8 mm (1,5 bis 3,0 mm) dick sein. Zum Herstellen wird eine Fasermaterial-Bodenlage 14 mit Schmelzkleber S besprüht sowie mit den Füllmittel-Partikeln 16 versehen, worauf man eine Decklage 18 aufbringt. Der Schmelzkleber kann herabtropfen oder schräg auf die Bodenlage 14 gesprüht bzw. aufgeschossen werden. Gleichzeitig oder danach werden die Partikel 16 aufgestreut, eventuell schräg oder quer zur Sprüh- bzw. Tropfrichtung des Schmelzklebers S und/oder entgegen der Laufrichtung L eines Trägerbandes T.

### Bezugszeichenliste

- L: Laufrichtung
- S: Schmelzkleber
- T: Trägerband
- 10: Faserfilter
- 12: Verbundkörper
- 14: Bodenlage
- 16: Partikel
- 18: Decklage
- 20: Klebepunkte
- 22: Walzenpaar / Kalander
- 24: Umlenkwalze
- 26: Partikel-Behälter
- 28: Decklagenrolle
- 30: Schmelzkleber-Behälter
- 36: Schleuderrad

## Patentansprüche

1. Verfahren zum Herstellen von Faserfiltern, die aus wenigstens einer Bodenlage (14) und wenigstens einer Decklage (18) aus für Fluide durchlässigem Fasermaterial, wie Papier, Kunststoff-Vlies, sowie aus einer zwischen den Fasermaterial-Lagen (14, 18) liegenden Schicht aus feinkörnigem Füllmittel, z.B. Aktivkohle-Partikeln (16), bestehen, wobei die Partikel (16) des Füllmittels mittels eines durch Sprühauftrag aufgetragenen Klebemittels (S) zumindest punktuell an Klebepunkten (20) stoffschlüssig zwischen den Fasermaterial-Lagen (14, 18) fixiert werden, dadurch **gekennzeichnet**,
a) daß als Klebemittel ein Schmelzkleber, z.B. aus Polyamid oder Polyethyl-Vinyl-Acetat, verwendet wird mit einem Erweichungsbereich von 80 bis 180 °C, vorzugsweise zwischen 100 und 145 °C,
b) daß die Fasermaterial-Bodenlage (14) mit dem Schmelzkleber (S) besprüht sowie mit den Füllmittel-Partikeln (16) versehen wird
c) daß nacheinander mehrere Schichten von Klebepunkten (20) und Partikeln (16) aufgetragen werden,
d) daß auf die von den Partikeln (16) gebildete Schicht die Fasermaterial-Decklage (18) aufgebracht wird,
e) wobei die Partikelschichten insgesamt wesentlich dicker sind als die Fasermaterial-Lagen (14, 18) und
f) wobei das Gewichtsverhältnis von Schmelzkleber- zu Partikel-Anteilen im Bereich von 5 % bis 30 %, vorzugsweise zwischen 8 % und 15 %, liegt.

2. Verfahren nach Anspruch 1, dadurch **gekennzeichnet**, daß die Bodenlage (14) auf einem Trägerband (T) abgelegt und nach Aufbringen von Schmelzkleber (S) und Partikeln (16) mit der Decklage (18) durch Kalandrieren zu einem Verbundkörper (12) verbunden wird.

3. Verfahren nach Anspruch 1 oder 2, dadurch **gekennzeichnet**, daß die Fasermaterial-Lagen (14, 18) Wandstärken im Bereich von 0,05 bis 1,0 mm, vorzugsweise 0,1 bis 0,6 mm, haben und daß die Füllmittel aus Partikeln (16) im Korngrößenbereich von 0,1 bis 6 mm, vorzugsweise 0,3 bis höchstens 1,0 mm, bestehen.

4. Verfahren nach einem der Ansprüche 1 bis 3, dadurch **gekennzeichnet**, daß Boden- und Decklagen (14, 18) aus synthetischen Vliesen und/oder Meltblown-Systemen verwendet werden.

5. Verfahren nach einem der Ansprüche 1 bis 4, dadurch **gekennzeichnet**, daß wenigstens eine der Boden- bzw. Decklagen (14, 18) imprägniert wird.

6. Verfahren nach einem der Ansprüche 1 bis 5, dadurch **gekennzeichnet**, daß die Füllmittel-Partikel (16) aus anorganischem Material, wie Aktivkohle, Mineralien, Silikaten, porösem Glas, und/oder aus organischem Material, wie Polymeren, Acrylsäure-Derivaten, bestehen.

7. Verfahren nach einem der Ansprüche 1 bis 6, dadurch **gekennzeichnet**, daß die Partikel (16) aus oberflächenbehandeltem und/oder mit funktionellen Oberflächen versehenem Material, wie Ionenaustauschern, Katalysatoren oder Superadsorbentien, bestehen.

8. Verfahren nach einem der Ansprüche 1 bis 7, dadurch **gekennzeichnet**, daß der Schmelzkleber-Auftrag durch Herabtropfen oder -sprühen auf die mit dem waagrecht angeordneten Trägerband (T) herangeführte Bodenlage (14) erfolgt.

9. Verfahren nach einem der Ansprüche 1 bis 8, dadurch **gekennzeichnet**, daß der Schmelzkleber (S) schräg auf die Bodenlage (14) gesprüht oder tröpfchenförmig aufgeschossen wird, beispielsweise mittels Schleuderrad (36) oder Druckluft-Impulsen.

10. Verfahren nach einem der Ansprüche 1 bis 9, dadurch **gekennzeichnet**, daß die Partikel (16) gleichzeitig mit dem Schmelzkleber-Auftrag auf die Bodenlage (14) gestreut werden.

11. Verfahren nach einem der Ansprüche 1 bis 10, dadurch **gekennzeichnet**, daß die Partikel (16) auf die Bodenlage (14) gestreut werden, nachdem sie mit Schmelzkleber-Punkten (20) versehen worden ist.

12. Verfahren nach einem der Ansprüche 1 bis 11, dadurch **gekennzeichnet**, daß die Partikel (16) in einer Richtung schräg oder quer zur Sprüh- bzw. Tropfrichtung des Schmelzklebers (S) auf die Bodenlage (14) aufgebracht werden.

13. Verfahren nach einem der Ansprüche 1 bis 12, dadurch **gekennzeichnet**, daß die Partikel (16) entgegen der Laufrichtung (L) des Trägerbandes (T) auf die Bodenlage (14) aufgebracht, insbesondere aufgebürstet, werden.

14. Verfahren nach einem der Ansprüche 1 bis 13, dadurch **gekennzeichnet**, daß das Trägerband (T) unter mehreren Stationen und aus diesen dosiert beladen mit Schmelzkleber- und Partikel-Behältern (30 bzw. 26) hindurchgeführt wird.

15. Verfahren nach einem der Ansprüche 1 bis 14, dadurch **gekennzeichnet**, daß die Gesamtdicke des kalandrierten Verbundkörpers (12) im Bereich von 0,4 bis 8 mm, vorzugsweise zwischen 1,5 und 3,0 mm, liegt.

16. Verfahren nach einem der Ansprüche 1 bis 15, dadurch **gekennzeichnet**, daß der Verbundkörper (12) auf Maß geschnitten wird, namentlich als Roll- oder Plattenware.

## Claims

1. Process for manufacturing fibre filters consisting of at least one bottom layer (14) and at least one top layer (18) of fibre material permeable by fluids, such as paper and synthetic nonwovens, and of an intermediate layer between the fibre material layers (14, 18) comprising a fine grain filler e.g. of activated carbon particles (16), which filler particles are fixed at least pointwise to adhesive dots (20) material-bonded between the fibre material layers (14, 18) by means of a sprayed-on adhesive (S), **wherein**
(a) as an adhesive, a hot-melt adhesive is used, e.g. of polyamide or polyethyl vinylacetate, having a softening range from 80 to 180 °C, preferably between 100 and 145 °C,
(b) the fibre material bottom layer (14) is provided with the sprayed-on hot-melt adhesive (S) and with the filler particles (16),
(c) several layers of adhesive dots (20) and particles (16) are successively applied,
(d) the fibre material top layer (18) is applied onto the layer comprising the particles (16),
(e) the particle layers altogether being substantially thicker than the fibre material layers (14, 18), and
(f) the weight ratio between the hot-melt adhesive and particle portions is in the range of 5 to 30 percent, preferably between 8 and 15 percent.

2. Process according to claim 1, **wherein** the bottom layer (14) is deposited on a support web (T) and, after applying the hot-melt adhesive (S) as well as the particles (16), is joined to the top layer (18) by calendering to form a compound body 12.

3. Process according to claim 1 or claim 2, **wherein** the fibre material layers (14, 18) have thicknesses in the range of 0.05 to 1.0 mm, preferably 0.1 to 0.6 mm, and **wherein** the filler particles (16) have grain sizes in the range of 0.1 to 6 mm, preferably 0.3 to 1.0 mm maximum.

4. Process according to any one of claims 1 to 3, **wherein** bottom and top layers (14, 18) of synthetic nonwovens and/or melt-blown systems are used.

5. Process according to any one of claims 1 to 4, **wherein** at least one of the bottom and top layers (14, 18) is impregnated.

6. Process according to any one of claims 1 to 5, **wherein** the filler particles (16) consist of inorganic materials such as activated carbon, minerals, silicates, porous glass and/or of organic materials such as polymeres and acrylic acid derivatives.

7. Process according to any one of claims 1 to 6, **wherein** the particles (16) consist of surface-treated materials and/or of materials having functional surfaces, such as ion exchangers, catalysts or super-adsorbents.

8. Process according to any one of claims 1 to 7, **wherein** the hot-melt adhesive (S) is applied through dripping or spraying onto the bottom layer (14) which is advanced by the horizontally arranged support web (T).

9. Process according to any one of claims 1 to 8, **wherein** the hot-melt adhesive (S) is sprayed or shot dropwise onto the bottom layer (14) at an angle, e.g. by means of a whirling wheel (36) or by compressed-air pulses.

10. Process according to any one of claims 1 to 9, **wherein** simultaneously with applying the hot-melt adhesive (S), the particles (16) are sprayed onto the bottom layer (14).

11. Process according to any one of claims 1 to 10, **wherein** the particles (16) are scattered onto the bottom layer (14) after it has been provided with the hot-melt adhesive dots (20).

12. Process according to any one of claims 1 to 11, **wherein** the particles (16) are applied onto the bottom layer (14) in a direction at an angle or transversely to the spraying or dripping direction of the hot-melt adhesive (S).

13. Process according to any one of claims 1 to 12, **wherein** the particles (16) are, in particular by brushing, applied onto the bottom layer (14) opposite to the direction of movement (L) of the support web (T).

14. Process according to any one of claims 1 to 13, **wherein** the support web (T) is passed below several stations and reservoirs (30; 26) out of which it is charged with dosed quantities of hot-melt adhesive and particles.

15. Process according to any one of claims 1 to 14, **wherein** the flat compound body (12) is calendered to a total thickness in the range of 0.4 to 8 mm, preferably between 1.5 and 3.0 mm.

16. Process according to any one of claims 1 to 15, **wherein** the compound body (12) is cut to size or is adapted to be cut to size, especially as roll or plate stock.

## Revendications

1. Procédé de fabrication d'un filtre constitué de fibres, qui consiste en au moins une couche inférieure (14) et au moins une couche supérieure (18) de matériau fibreux perméable aux fluides tel que papier et matelas en matière plastique, ainsi qu'en une couche située entre les couches de matériau fibreux (14, 18) et faite d'un produit de remplissage à grain fin comme par exemple des particules (16) de charbon actif, ces particules (16) du produit de remplissage étant fixées, entre les couches du matériau fibreux (14, 18), par assemblage de la matière, au moins ponctuellement par des points de colle (20) au moyen d'une colle S appliquée par pulvérisation, **caractérisé** par le fait
a) que comme colle, on utilise une colle à fusion, par exemple en polyamide ou en acétate de polyéthyle-vinyle, avec une fraction de ramollissement de 80 à 180 °C, de préférence de 100 à 145 °C,
b) que la couche fibreuse inférieure (14) est aspergée d'une colle à fusion (S) et pourvue de particules (16) du produit de remplissage,
c) que plusieurs couches de points de colle (20) et de particules (16) sont appliquées successivement,
d) que la couche fibreuse supérieure (18) est appliquée sur la couche formée par les particules (16),
e) toutes les couches de particules ensemble étant sensiblement plus grosses que les couches fibreuses (14, 18) et
f) le rapport du poids de la colle à fusion par rapport aux parts de particules se situant entre 5 % et 30 %, de préférence 8 % et 15 %.

2. Procédé selon la revendication 1, **caractérisé** par le fait que la couche inférieure (14) est placée sur une bande porteuse (T), puis, après application de colle à fusion (S) et de particules (16), assemblée à la couche supérieure (18) par calandrage en un corps composite (12).

3. Procédé selon la revendication 1 ou 2, **caractérisé** par le fait que les couches en matériau fibreux (14, 18) ont des épaisseurs de paroi de 0,05 à 1,0 mm, de préférence de 0,1 à 0,6 mm, et que les produits de remplissage consistent en des particules (16) avec une fraction granulométrique de 0,1 à 6 mm, de préférence de 0,3 à 1,0 mm au maximum.

4. Procédé selon l'une des revendications 1 à 3, **caractérisé** par le fait que l'on utilise des couches inférieures et supérieures (14, 18) en matelas synthétiques et/ou en systèmes Meltblown.

5. Procédé selon l'une des revendications 1 à 4, **caractérisé** par le fait qu'au moins une des couches inférieure ou supérieure (14, 18) est imprégnée.

6. Procédé selon l'une des revendications 1 à 5, **caractérisé** par le fait que les particules (16) du produit de remplissage consistent en un matériau inorganique tel que charbon actif, minéraux, silicates, verre poreux, et/ou en un matériau organique tel que polymères, dérivés d'acide acrylique.

7. Procédé selon l'une des revendications 1 à 6, **caractérisé** par le fait que les particules (16) consistent en un matériau traité en surface et/ou pourvu de surfaces fonctionnelles, par exemple des échangeurs d'ions, catalysateus ou superadsorbants.

8. Procédé selon l'une des revendications 1 à 7, **caractérisé** par le fait que l'application de colle à fusion se fait par retombée de gouttes, ou par pulvérisation, sur la couche inférieure (14) amenée par la bande porteuse (T) disposée horizontalement.

9. Procédé selon l'une des revendications 1 à 8, **caractérisé** par le fait que la colle à fusion (S) est pulvérisée ou projetée par gouttelettes obliquement sur la couche inférieure (14), par exemple au moyen d'une roue de projection (36) ou au moyen d'impulsions d'air comprimé.

10. Procédé selon l'une des revendications 1 à 9, **caractérisé** par le fait que les particules (16) sont répandues sur la couche inférieure (14) simultanément avec l'application de la colle â fusion.

11. Procédé selon l'une des revendications 1 à 10, **caractérisé** par le fait que les particules (16) sont répandues sur la couche inférieure (14) après avoir été pourvues de points de colle à fusion (20).

12. Procédé selon l'une des revendications 1 à 11, **caractérisé** par le fait que les particules (16) sont appliquées sur la couche inférieure (14) en une direction oblique ou transversale par rapport à la direction de pulvérisation ou de chute des gouttes de la colle à fusion (S).

13. Procédé selon l'une des revendications 1 à 12, **caractérisé** par le fait que les particules (16) sont appliquées, notamment à la brosse, sur la couche inférieure (14), contre le sens de marche de la bande porteuse (T).

14. Procédé selon l'une des revendications 1 à 13, **caractérisé** par le fait que la bande porteuse (T) passe sous plusieurs stations avec des récipients de colle et de particules (30 et 26) et qu'elle est chargée par celles-ci de façon dosée.

15. Procédé selon l'une des revendications 1 à 14, **caractérisé** par le fait que l'épaisseur totale du corps composite calandré (12) se situe entre 0,4 et 8,0 mm, de préférence entre 1,5 et 3,0 mm.

16. Procédé selon l'une des revendications 1 à 15, **caractérisé** par le fait que le corps composite (12) est coupé sur mesure, notamment en un produit enroulé ou en plaques.
